(19) **Europäisches Patentamt / European Patent Office / Office européen des brevets**

(11) **EP 4 464 160 A1**

(12) **EUROPEAN PATENT APPLICATION**
published in accordance with Art. 153(4) EPC

(43) Date of publication:
20.11.2024 Bulletin 2024/47

(21) Application number: 23876568.9

(22) Date of filing: 28.09.2023

(51) International Patent Classification (IPC):
*A01N 43/80* (2006.01)    *A01N 57/20* (2006.01)
*A01P 13/00* (2006.01)

(52) Cooperative Patent Classification (CPC):
A01N 43/80; A01N 57/20; A01P 13/00

(86) International application number:
PCT/CN2023/122836

(87) International publication number:
WO 2024/078365 (18.04.2024 Gazette 2024/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 10.10.2022 CN 202211236697

(71) Applicant: NANTONG JIANGSHAN
AGROCHEMICAL &
CHEMICALS CO., LTD.
Economic and Technological Development Zone
Nantongshi, Jiangsu 226000 (CN)

(72) Inventors:
• WANG, Li
Nantong, Jiangsu 226000 (CN)
• FU, Ruixia
Nantong, Jiangsu 226000 (CN)
• WANG, Junping
Nantong, Jiangsu 226000 (CN)
• ZHU, Yanmei
Nantong, Jiangsu 226000 (CN)
• FAN, Meiyun
Nantong, Jiangsu 226000 (CN)

(74) Representative: Winter, Brandl - Partnerschaft
mbB
Alois-Steinecker-Straße 22
85354 Freising (DE)

(54) **HERBICIDAL COMPOSITION CONTAINING 3-(2-CHLORO-4-FLUORO-5-(3-METHYL-2,6-DIOXO-4-TRIFLUOROMETHYL-3,6-DIHYDROPYRIMIDIN-1(2H)-YL)PHENYL)-5-METHYL-4,5-DIHYDROISOXAZOLE-5-CARBOXYLIC ACID ETHYL ESTER AND GLUFOSINATE-P AND USE THEREOF**

(57) The present disclosure relates to the technical field of pesticides, and specifically relates to a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P and use thereof. Preparation raw materials of the herbicidal composition at least include the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and the glufosinate-P; and a dosage form of the herbicidal composition is at least one of a microemulsion, an emulsion in water, a dispersible oil suspension, a granule, a wettable powder, and a water-dispersible granule. The compounding of 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P expands a herbicidal spectrum, improves a herbicidal effect, has the advantages of being quick in taking effect, long in an effect-lasting period, capable of delaying herbicide resistance, thorough in weeding, low in residue, low in toxicity, and safe and environmentally friendly, and has a good preventative effect on weeds in non-cultivated land.

EP 4 464 160 A1

**Description**

**TECHNICAL FIELD**

The present disclosure relates to the technical field of pesticides, and specifically relates to a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P and use thereof.

**BACKGROUND**

Herbicides are essential in practical application processes. However, a single effective herbicidal ingredient is prone to the development of weed resistance and is free of a broad herbicidal spectrum. Meanwhile, a single active ingredient has low performance stability under high and low temperature conditions, resulting in limited application. 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, as a patented compound of Nantong Jiangshan Agrochemical & Chemicals Co., Ltd., is a non-selective contact herbicide, which can dry and kill weeds by inhibiting the activity of protoporphyrin oxidase (PPO), has a good control effect on various weeds, and particularly has a special effect on glyphosate resistant weeds. Glufosinate-P is a phosphonic acid herbicide and a synthesis inhibitor for glutamine. After the glufosinate-P is applied, ammonium metabolism in plants is disordered, ammonium ions, as a cytotoxic agent, are accumulated in the plants, and meanwhile, photosynthesis is inhibited. The glufosinate-P is applicable to control of weeds in non-cultivated land.

Single use of the glufosinate-P has certain limitations. For example, a Chinese patent application (publication No. CN105660688A) discloses a soluble preparation containing glufosinate-P and a preparation method therefor. Specifically, the soluble preparation is prepared by using the glufosinate-P as an effective active ingredient and adding a surfactant and a filler for practical application. However, the soluble preparation has low herbicidal effectiveness and universality, thereby limiting the use range. In order to solve the problem of insufficient efficacy of a single pesticide, a Chinese patent application (publication No. CN112741102A) discloses a glufosinate-P herbicide. Through compounded combination of the glufosinate-P and bromoxynil and/or chlorimuron-ethyl, although the herbicidal spectrum is expanded to a certain extent, the efficacy and dosage of pesticides are affected by the system stability of compositions prepared in different dosage forms, leading to a certain impact on the environment and the economy.

Aiming at the problem of field control, the present disclosure provides a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P.

**SUMMARY**

In order to solve the above problems, a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P and use thereof are provided. The compounding of 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P expands a herbicidal spectrum, improves a herbicidal effect, and has the advantages of being quick in taking effect, long in an effect-lasting period, capable of delaying herbicide resistance, thorough in weeding, low in residue, low in toxicity, and safe and environmentally friendly, and has a good preventative effect on weeds in non-cultivated land.

On the one hand, the present disclosure provides a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P. Preparation raw materials of the herbicidal composition at least include the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and the glufosinate-P; and a dosage form of the herbicidal composition is at least one of a microemulsion, an emulsion in water, a dispersible oil suspension, a granule, a wettable powder, and a water-dispersible granule.

As a preferred technical solution, the preparation raw materials of the herbicidal composition further include at least one of a dispersant, a wetting agent, a disintegrating agent, an emulsifier, an antifreezing agent, a defoamer, a thickener, a filler, an organic solvent, and water.

As a preferred technical solution, the dosage form of the herbicidal composition is the microemulsion, and in percentage by mass, the preparation raw materials of the microemulsion at least include: 0.5-2.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 4.5-40% of the glufosinate-P, 2-8% of the organic solvent, 10-30% of the emulsifier, 0.01-0.1% of the defoamer, 0.1-2% of the thickener, 1-10% of the antifreezing agent, and the balance of deionized water added to 100%.

As a preferred technical solution, the dosage form of the herbicidal composition is the emulsion in water, and in percentage by mass, the preparation raw materials of the emulsion in water at least include: 0.5-2.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 4.5-40% of the glufosinate-P, 2-8% of the organic solvent, 2-10% of the emulsifier, 0.01-0.1% of the defoamer, 0.1-2% of the thickener, 1-10% of the antifreezing agent, and the balance of deionized water added to 100%.

As a preferred technical solution, the dosage form of the herbicidal composition is the dispersible oil suspension, and in percentage by mass, the preparation raw materials of the dispersible oil suspension at least include: 0.5-2.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 9-40% of the glufosinate-P, 4-10% of the wetting agent, 3-8% of the dispersant, 2-5% of the emulsifier, 0-10% of the thickener, 0-5% of the defoamer, and the balance of the organic solvent added to 100%.

As a preferred technical solution, the dosage form of the herbicidal composition is the wettable powder, and in percentage by mass, the preparation raw materials of the wettable powder at least include: 0.5-5.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 4.5-80% of the glufosinate-P, 0.5-5% of the organic solvent, 1-3% of the wetting agent, 2-8% of the dispersant, 0.01-0.1% of the defoamer, and the balance of the filler added to 100%.

As a preferred technical solution, the dosage form of the herbicidal composition is the water-dispersible granule, and in percentage by mass, the preparation raw materials of the water dispersible granule at least include: 2-9% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 35-85% of the glufosinate-P, 2-9% of the organic solvent, 1-5% of the wetting agent, 5-20% of the dispersant, 0-15% of the disintegrating agent, and the balance of the filler added to 100%.

As a preferred technical solution, the dosage form of the herbicidal composition is the granule, and in percentage by mass, the preparation raw materials of the granule at least include: 0.5-1.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 4.5-20% of the glufosinate-P, 0.5-2% of the wetting agent, 1-4% of the dispersant, 0.5-2% of the emulsifier, 5-15% of the organic solvent, and the balance of the filler added to 100%.

As a preferred technical solution, a mass ratio of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester to the glufosinate-P is 1:(9-20).

Based on the system of the present disclosure, the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and the glufosinate-P are used as effective active ingredients. In particular, based on a herbicidal effect obtained by mixing and combining the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and the glufosinate-P at different ratios, it is found that a synergistic herbicidal effect on gramineous weeds such as *Eleusine indica, Digitaria sanguinalis, Cynodon dactylon,* thatch grass and reeds, broad-leaf weeds such as *Erigeron canadensis, Solidago canadensis, Atlernanthera philoxeroides* and *Solanum nigrum* as well as small shrub weeds and sedge is achieved when the mass ratio of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester to the glufosinate-P is 1:(9-20). The two pesticides have a synergistic effect based on different herbicidal action mechanisms, and a dosage is decreased.

As a preferred technical solution, the dispersant is selected from at least one of a dispersant NNO, a dispersant MF, a dispersant NO, sodium lignosulfonate, sodium carboxymethyl cellulose, polyvinyl alcohol, polyethylene glycol, sodium tripolyphosphate, and sodium hexametaphosphate.

As a preferred technical solution, the wetting agent is selected from at least one of a tea seed powder, a saponin powder, SOPA230, SOPA 235, SOPA 270, a washing powder, and sodium dodecylbenzene sulfonate.

As a preferred technical solution, the disintegrating agent is selected from at least one of sodium chloride, sodium sulfate, sodium nitrate, ammonium sulfate, sodium carbonate, sodium carboxymethyl starch, sodium alginate, polyvinylpyrrolidone, and bentonite.

As a preferred technical solution, the emulsifier is selected from at least one of alkylphenol polyoxyethylene ether, phenylethylphenol polyoxyethylene polyoxyepropylene ether, polyoxyethylene sorbitan monolaurate, polyoxyethylene sorbitan monopalmitate, polyoxyethylene sorbitan monostearate, sorbitan monooleate, sorbitan laurate, sorbitan monopalmitate, sorbitan stearate, castor oil polyoxyethylene ether, alkylbenzene sulfonate, alkyl naphthalene sulfonate, and alkyl sulfonate.

As a preferred technical solution, the antifreezing agent is selected from at least one of ethylene glycol, propylene glycol, glycerol, hexanediol, urea, and ammonium sulfate.

As a preferred technical solution, the defoamer includes at least one of an alcohol defoamer, a phosphate defoamer, a fatty acid and fatty acid ester defoamer, and an organic silicon defoamer. The alcohol defoamer includes at least one of methanol, ethanol, and butanol; the phosphate defoamer includes at least one of tributyl phosphate, trioctyl phosphate, and alkyl ether phosphate; and the fatty acid and fatty acid ester defoamer includes at least one of sorbitan monolaurate and fatty alcohol polyoxyethylene ether.

As a preferred technical solution, the thickener is selected from one or more of gelatin, guar gum, aluminum magnesium silicate, hydroxyethyl cellulose, sodium tripolyphosphate, phenolic resin, methyl cellulose, polyethylene glycol, and polyvinyl alcohol.

As a preferred technical solution, the filler is selected from one or more of kaolin, diatomite, bentonite, attapulgite, white carbon black, starch, and light calcium carbonate.

As a preferred technical solution, the organic solvent includes at least one of aromatic hydrocarbons, alkanes, aliphatic hydrocarbons, petroleum products, ketones, ethers, alcohols, turpentine, pine oil, a rosin oil-vegetable oil solvent, vegetable oil, and modified vegetable oil.

On the other hand, the present disclosure provides use of a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P. The herbicidal composition is used in prevention and control of weeds in non-cultivated land.

Beneficial effects are as follows.

1. The present disclosure provides a herbicidal composition containing 3-(2-chloro-4-fluoro-5-(3-methyl-2,6-dioxo-4-trifluoromethyl-3, 6-dihydropyrimidin-1 (2H)-yl)phenyl)-5-methyl-4, 5-dihydroisoxazole-5-carboxylic acid ethyl ester and glufosinate-P and use thereof. The compounding of 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P expands a herbicidal spectrum, improves a herbicidal effect, and has the advantages of being quick in taking effect, long in an effect-lasting period, capable of delaying herbicide resistance, thorough in weeding, low in residue, low in toxicity, and safe and environmentally friendly, and has a good preventative effect on weeds in non-cultivated land.

2. Based on the system of the present disclosure, the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and the glufosinate-P are used as effective active ingredients. In particular, based on a herbicidal effect obtained by mixing and combining the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and the glufosinate-P at different ratios, it is found that a synergistic herbicidal effect on gramineous weeds such as *Eleusine indica, Digitaria sanguinalis, Cynodon dactylon,* thatch grass and reeds, broad-leaf weeds such as *Erigeron canadensis, Solidago canadensis, Atlernantheraphiloxeroides* and *Solanum nigrum* as well as small shrub weeds and sedge is achieved when the mass ratio of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester to the glufosinate-P is 1:(9-20). The two pesticides have a synergistic effect based on different herbicidal action mechanisms, and a dosage is decreased.

3. The herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P provided by the present disclosure can be prepared into a microemulsion, an emulsion in water, a dispersible oil suspension, a wettable powder, a water-dispersible granule, and a granule, so as to meet demands of different use environments and use occasions.

## DESCRIPTION OF THE EMBODIMENTS

Example 1

Example 1 of the present disclosure provides a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P. A dosage form of the herbicidal composition is a microemulsion, and in percentage by mass, preparation raw materials of the microemulsion include: 1.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 20% of the glufosinate-P, 5% of an organic solvent, 20% of an emulsifier, 0.05% of a defoamer, 1% of a thickener, 5% of an antifreezing agent, and the balance of deionized water added to 100%.

The organic solvent is a solvent oil 150#.

The emulsifier is phenyethylphenol polyoxyethylene polyoxyepropylene ether purchased from Nantong Chenrun Chemical Co., Ltd.

The antifreezing agent includes ethylene glycol and urea, and a mass ratio of the ethylene glycol to the urea is 3:2.

The defoamer is a fatty acid and fatty acid ester defoamer, and the fatty acid and fatty acid ester defoamer is sorbitan monolaurate.

The thickener is sodium tripolyphosphate.

Example 2

Example 2 of the present disclosure provides a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P. A dosage form of the herbicidal composition is a microemulsion. A specific implementation mode is the same as that in Example 1, but has the differences that in percentage by mass, preparation raw materials of the microemulsion include: 1.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 18% of the glufosinate-P, 5% of an organic solvent, 20% of an emulsifier, 0.05% of a defoamer, 1% of a thickener, 5% of an antifreezing agent, and the balance of deionized water added to 100%.

Example 3

Example 3 of the present disclosure provides a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P. A dosage form of the herbicidal composition is a microemulsion. A specific implementation mode is the same as that in Example 1, but has the differences that in percentage by mass, preparation raw materials of the microemulsion include: 1.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 16% of the glufosinate-P, 5% of an organic solvent, 20% of an emulsifier, 0.05% of a defoamer, 1% of a thickener, 5% of an antifreezing agent, and the balance of deionized water added to 100%.

Example 4

Example 4 of the present disclosure provides a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P. A dosage form of the herbicidal composition is a microemulsion. A specific implementation mode is the same as that in Example 1, but has the differences that in percentage by mass, preparation raw materials of the microemulsion include: 1.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 14% of the glufosinate-P, 5% of an organic solvent, 20% of an emulsifier, 0.05% of a defoamer, 1% of a thickener, 5% of an antifreezing agent, and the balance of deionized water added to 100%.

Example 5

Example 5 of the present disclosure provides a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P. A dosage form of the herbicidal composition is a microemulsion. A specific implementation mode is the same as that in Example 1, but has the differences that in percentage by mass, preparation raw materials of the microemulsion include: 1.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 10% of the glufosinate-P, 5% of an organic solvent, 20% of an emulsifier, 0.05% of a defoamer, 1% of a thickener, 5% of an antifreezing agent, and the balance of deionized water added to 100%.

Example 6

Example 6 of the present disclosure provides a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P. A dosage form of the herbicidal composition is an emulsion in water, and in percentage by mass, preparation raw materials of the emulsion in water include: 1.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 20% of the glufosinate-P, 4% of an organic solvent, 8% of an emulsifier, 0.03% of a defoamer, 1% of a thickener, 6% of an antifreezing agent, and the balance of deionized water added to 100%.

The organic solvent is isopropanol.

The emulsifier is phenyethylphenol polyoxyethylene polyoxyepropylene ether purchased from Nantong Chenrun Chemical Co., Ltd.

The antifreezing agent includes ethylene glycol and urea, and a mass ratio of the ethylene glycol to the urea is 3:2.

The defoamer is a fatty acid and fatty acid ester defoamer, and the fatty acid and fatty acid ester defoamer is sorbitan monolaurate.

The thickener is aluminum magnesium silicate.

Example 7

Example 7 of the present disclosure provides a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P. A dosage form of the herbicidal composition is a dispersible oil suspension, and in percentage by mass, preparation raw materials of the dispersible oil suspension include: 1% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 20% of the glufosinate-P, 6% of a wetting agent, 5% of a dispersant, 3% of an emulsifier, 2% of a thickener, 1% of a defoamer, and the balance of an organic solvent added to 100%.

The dispersant is a dispersant NNO.

The wetting agent is SOPA230.

The organic solvent is a solvent oil 200#.

The emulsifier is phenyethylphenol polyoxyethylene polyoxyepropylene ether purchased from Nantong Chenrun Chemical Co., Ltd.

The defoamer is a fatty acid and fatty acid ester defoamer, and the fatty acid and fatty acid ester defoamer is sorbitan monolaurate.

The thickener is gelatin.

Example 8

Example 8 of the present disclosure provides a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P. A dosage form of the herbicidal composition is a wettable powder, and in percentage by mass, preparation raw materials of the wettable powder include: 3% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 60% of the glufosinate-P, 3% of an organic solvent, 2% of a wetting agent, 5% of a dispersant, 0.06% of a defoamer, and the balance of a filler added to 100%.

The dispersant is sodium lignosulfonate.

The wetting agent is sodium dodecylbenzene sulfonate.

The organic solvent is a solvent oil 200#.

The defoamer is a fatty acid and fatty acid ester defoamer, and the fatty acid and fatty acid ester defoamer is sorbitan monolaurate.

The filler is kaolin.

Example 9

Example 9 of the present disclosure provides a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P. A dosage form of the herbicidal composition is a water-dispersible granule, and in percentage by mass, preparation raw materials of the water dispersible granule include: 4% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 64% of the glufosinate-P, 5% of an organic solvent, 3% of a wetting agent, 10% of a dispersant, 5% of a disintegrating agent, and the balance of a filler added to 100%.

The dispersant is sodium lignosulfonate.

The wetting agent is sodium dodecylbenzene sulfonate.

The organic solvent is isopropanol.

The disintegrating agent is sodium alginate.

The filler is kaolin.

Example 10

Example 10 of the present disclosure provides a herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P. A dosage form of the herbicidal composition is a granule, and in percentage by mass, preparation raw materials of the granule include: 0.8% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 16% of the glufosinate-P, 1% of a wetting agent, 3% of a dispersant, 1% of an emulsifier, 10% of an organic solvent, and the balance of a filler added to 100%.

The dispersant is a dispersant MF.

The wetting agent is SOPA 270.

The emulsifier is phenyethylphenol polyoxyethylene polyoxyepropylene ether purchased from Nantong Chenrun Chemical Co., Ltd.

The filler is kaolin.

The organic solvent is a solvent oil 150#.

Performance test methods

1. Laboratory activity determination test

(1) Test objective: Inhibitory effects of 3-(2-chloro-4-fluoro-5-(3-methyl-2,6-dioxo-4-trifluoromethyl-3, 6-dihydropyrimidin-1 (2H)-yl)phenyl)-5-methyl-4, 5-dihydroisoxazole-5-carboxylic acid ethyl ester, glufosinate-P and different mixed compositions of the two pesticides on *Erigeron canadensis* under potting conditions in a greenhouse are determined, and a combined action of the two pesticides is evaluated. Relevant results are as shown in Table 2.

(2) Test method: *Erigeron canadensis* was used as a research object, organic soil (with a pH value of 6.7 and an organic matter content of 1.59%) without herbicides was loaded into plastic pots with a size of $22 \times 15 \times 10$ cm, 20 seeds were evenly sowed in each pot, and stems and leaves were treated by a spray tower when weeds grew to a 2- to 4-leaf stage, where each treatment was repeated for 4 times, and a blank control was set. After a pesticide liquid was air-dried, a test material was placed in a greenhouse for cultivation. Control situations of the weeds were observed after a pesticide was applied for 15 d and 30 d, and the fresh weight of an aboveground part was weighed to evaluate a toxicity effect of the pesticide on the weeds according to an inhibition rate of the target weeds. A method for evaluating the combined action of the two pesticides after compounding was used with reference to a Gowing method in Pesticides Guidelines for Laboratory Bioactivity Tests: Determining Combined Action of Mixtures.

Fresh weight inhibition rate%=(fresh weight of a control group - fresh weight of a treatment group)/fresh weight of a control group* 100.

$$E_0=X+Y-XY/100.$$

In the above formula, $E_0$ refers to a theoretical fresh weight inhibition rate of a mixture of the herbicides 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P, X refers to a measured fresh weight inhibition rate of the single herbicide 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, and Y refers to a measured fresh weight inhibition rate of the single herbicide glufosinate-P. E was set as a measured fresh weight inhibition rate of a mixture of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and the glufosinate-P. When $E-E_0$ is equal to or greater than 10, a synergistic effect is achieved. When $E-E_0$ is greater than -10 and less than 10, an additive effect is achieved. When $E-E_0$ is equal to or less than -10, an antagonistic effect is achieved.

2. Field efficacy test

Test pesticide: Preparations provided in Examples 1-5 were used in a field test.

Control pesticide: A wettable powder containing 66% of flumioxazin and glufosinate ammonium (commercially available) and

a dispersible oil suspension containing 40% of saflufenacil and glyphosate (commercially available) were used.

Control object: Weeds in non-cultivated land were used. The weeds in the selected test land mainly include gramineous weeds such as *Digitaria sanguinalis, Cynodon dactylon* and thatch grass as well as broad-leaf weeds such as *Erigeron canadensis, Solanum nigrum* and *Persicaria lapathifolia.*

Test method: Various pesticides were accurately weighed according to an area of the test land, diluted with water and evenly sprayed by a knapsack sprayer, where a fan-shaped nozzle special for herbicides was selected. A pesticide liquid was required to be evenly sprayed to the test land during spraying, such that the pesticide liquid was not sprayed repeatedly in one place and was sprayed everywhere without a missing place.

Investigation: Death situations of the weeds were observed after a pesticide was applied for 15 d and 30 d, and various treatment groups were compared in herbicidal activity. Efficacy results are shown in Table 3 and Table 4.

Table 2 Determination of laboratory toxicity of a mixture of 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P to Erigeron canadensis

| Pesticide | Dosage (ga.i./mu) | Measured control efficacy E (%) | Theoretical control efficacy $E_0$ (%) | $E-E_0$ | Evaluation of combined action |
|---|---|---|---|---|---|
| 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester | 1 | 33.82 | | | |
| | 2 | 44.46 | | | |
| | 3 | 72.89 | | | |
| | 4 | 80.22 | | | |
| | 5 | 89.09 | | | |
| Glufosinate-P | 8 | 21.63 | | | |
| | 12 | 51.94 | | | |
| | 16 | 67.92 | | | |
| | 20 | 74.07 | | | |
| | 24 | 78.07 | | | |
| 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester + glufosinate-P | 1+24 | 94.56 | 85.49 | 9.07 | Additive |
| | 1+20 | 92.87 | 82.84 | 10.03 | Synergistic |
| | 1+16 | 89.45 | 78.77 | 10.68 | Synergistic |
| | 1+12 | 70.75 | 68.19 | 2.56 | Additive |
| | 1+8 | 49.98 | 48.13 | -8.15 | Additive |
| | 2+24 | 95.22 | 87.82 | 7.40 | Additive |
| | 2+20 | 93.79 | 85.60 | 8.19 | Additive |
| | 2+16 | 85.54 | 82.18 | 3.36 | Additive |
| | 2+12 | 77.49 | 73.31 | 4.18 | Additive |
| | 2+8 | 59.78 | 56.47 | 3.31 | Additive |
| | 3+24 | 94.46 | 94.05 | 0.41 | Additive |
| | 3+20 | 93.61 | 92.97 | 0.64 | Additive |
| | 3+16 | 90.54 | 91.30 | -0.76 | Additive |
| | 3+12 | 83.27 | 86.97 | -3.70 | Additive |
| | 3+8 | 79.87 | 78.75 | 1.12 | Additive |
| | 4+20 | 97.32 | 94.87 | 2.45 | Additive |
| | 4+16 | 92.87 | 93.65 | -0.78 | Additive |

(continued)

| Pesticide | Dosage (ga.i./mu) | Measured control efficacy E (%) | Theoretical control efficacy $E_0$ (%) | $E-E_0$ | Evaluation of combined action |
|---|---|---|---|---|---|
| | 4+12 | 92.11 | 90.49 | 1.62 | Additive |
| | 4+8 | 89.15 | 84.50 | 4.65 | Additive |
| | 5+20 | 97.38 | 97.17 | 0.21 | Additive |
| | 5+16 | 92.36 | 96.50 | -4.14 | Additive |
| | 5+12 | 91.88 | 94.76 | -2.88 | Additive |
| | 5+8 | 90.45 | 91.45 | -1.00 | Additive |

Table 3 Fresh weight control efficacy of a mixture of 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P to field weeds after application for 15 days

| Treatment pesticide (weight ratio) | Dosage (g a.i./mu) | Gramineous weed control efficacy (%) | Broad-leaf weed control efficacy (%) | Total control efficacy (%) |
|---|---|---|---|---|
| Example 5 | 20 | 88.75 | 90.18 | 89.64 |
| Example 4 | 20 | 90.43 | 92.39 | 91.09 |
| Example 3 | 20 | 93.32 | 95.15 | 93.98 |
| Example 2 | 20 | 95.29 | 97.22 | 96.76 |
| Example 1 | 20 | 98.43 | 100 | 99.56 |
| Wettable powder containing 66% of flumioxazin and glufosinate ammonium | 20 | 92.89 | 90.25 | 92.00 |
| Dispersible oil suspension containing 40% of safhifenacil and glyphosate | 20 | 93.76 | 94.00 | 93.89 |

Table 4 Fresh weight control efficacy of a mixture of 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P to field weeds after application for 30 days

| Treatment pesticide (weight ratio) | Dosage (g a.i./mu) | Gramineous weed control efficacy (%) | Broad-leaf weed control efficacy (%) | Total control efficacy (%) |
|---|---|---|---|---|
| Example 5 | 20 | 84.53 | 82.19 | 83.95 |
| Example 4 | 20 | 87.32 | 86.56 | 87.00 |
| Example 3 | 20 | 89.09 | 90.77 | 89.78 |
| Example 2 | 20 | 92.85 | 91.67 | 91.20 |
| Example 1 | 20 | 94.00 | 94.10 | 94.00 |
| Wettable powder containing 66% of flumioxazin and glufosinate ammonium | 20 | 89.38 | 85.56 | 86.76 |
| Dispersible oil suspension containing 40% of safhifenacil and glyphosate | 20 | 91.23 | 90.35 | 90.54 |

In summary, it can be seen from Tables 1-3 that an overall control effect is improved by combined action of two active pesticide ingredients in the present disclosure, a quick effect is obviously improved, and an obvious effect is achieved within 2 hours after application at high temperature. An effect-lasting period is obviously prolonged, and a herbicidal spectrum is further expanded. An obvious synergistic effect on prevention and control of gramineous weeds and broad-leaf weeds is achieved. Meanwhile, the efficacy of a mixture of the present disclosure after use is significantly better than that of a single pesticide and is equivalent to that of commercially available compounded herbicides or even better than that of commercially available herbicides, and a mixed herbicide of the present disclosure is conducive to delaying the herbicide resistance of weeds.

**Claims**

1.  A herbicidal composition containing 3-(2-chloro-4-fluoro-5-(3-methyl-2,6-dioxo-4-trifluoromethyl-3, 6-dihydropyrimidin-1 (2H)-yl)phenyl)-5-methyl-4, 5-dihydroisoxazole-5-carboxylic acid ethyl ester and glufosinate-P, wherein preparation raw materials of the herbicidal composition at least comprise the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic      acid ethyl ester and the glufosinate-P; and a dosage form of the herbicidal composition is at least one of a microemulsion, an emulsion in water, a dispersible oil suspension, a granule, a wettable powder, and a water-dispersible granule.

2.  The herbicidal composition containing 3-(2-chloro-4-fluoro-5-(3-methyl-2,6-dioxo-4-trifluoromethyl-3, 6-dihydropyrimidin-1 (2H)-yl)phenyl)-5-methyl-4, 5-dihydroisoxazole-5-carboxylic acid ethyl ester and glufosinate-P according to claim 1, wherein the preparation raw materials of the herbicidal composition further comprise at least one of a dispersant, a wetting agent, a disintegrating agent, an emulsifier, an antifreezing agent, a defoamer, a thickener, a filler, an organic solvent, and water.

3.  The herbicidal composition containing 3-(2-chloro-4-fluoro-5-(3-methyl-2,6-dioxo-4-trifluoromethyl-3, 6-dihydropyrimidin-1 (2H)-yl)phenyl)-5-methyl-4, 5-dihydroisoxazole-5-carboxylic acid ethyl ester and glufosinate-P according to claim 2, wherein the dosage form of the herbicidal composition is the microemulsion, and in percentage by mass, the preparation raw materials of the microemulsion at least comprise: 0.5-2.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 4.5-40% of the glufosinate-P, 2-8% of the organic solvent, 10-30% of the emulsifier, 0.01-0. 1% of the defoamer, 0.1-2% of the thickener, 1-10% of the antifreezing agent, and the balance of deionized water added to 100%.

4.  The herbicidal composition containing 3-(2-chloro-4-fluoro-5-(3-methyl-2,6-dioxo-4-trifluoromethyl-3, 6-dihydropyrimidin-1 (2H)-yl)phenyl)-5-methyl-4, 5-dihydroisoxazole-5-carboxylic acid ethyl ester and glufosinate-P according to claim 2, wherein the dosage form of the herbicidal composition is the emulsion in water, and in percentage by mass, the preparation raw materials of the emulsion in water at least comprise: 0.5-2.0% of the 3-(2-chloro-4-fluoro-5-(3-methyl-2,6-dioxo-4-trifluoromethyl-3, 6-dihydropyrimidin-1 (2H)-yl)phenyl)-5-methyl-4, 5-dihydroisoxazole-5-carboxylic acid ethyl ester, 4.5-40% of the glufosinate-P, 2-8% of the organic solvent, 2-10% of the emulsifier, 0.01-0.1% of the defoamer, 0.1-2% of the thickener, 1-10% of the antifreezing agent, and the balance of deionized water added to 100%.

5.  The herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P according to claim 2, wherein the dosage form of the herbicidal composition is the dispersible oil suspension, and in percentage by mass, the preparation raw materials of the dispersible oil suspension at least comprise: 0.5-2.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 9-40% of the glufosinate-P, 4-10% of the wetting agent, 3-8% of the dispersant, 2-5% of the emulsifier, 0-10% of the thickener, 0-5% of the defoamer, and the balance of the organic solvent added to 100%.

6.  The herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P according to claim 2, wherein the dosage form of the herbicidal composition is the wettable powder, and in percentage by mass, the preparation raw materials of the wettable powder at least comprise: 0.5-5.0% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 4.5-80% of the glufosinate-P, 0.5-5% of the organic solvent, 1-3% of the wetting agent, 2-8% of the dispersant, 0.01-0.1% of the defoamer, and the balance of the filler added to 100%.

7.  The herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P according to claim 2, wherein the dosage form of the herbicidal composition is the water-dispersible granule, and in percentage by mass, the preparation raw materials of the water-dispersible granule at least comprise: 2-9% of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester, 35-85% of the glufosinate-P, 2-9% of the organic solvent, 1-5% of the wetting agent, 5-20% of the dispersant, 0-15% of the disintegrating agent, and the balance of the filler added to 100%.

8. The herbicidal composition containing 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester and glufosinate-P according to claim 2, wherein the dosage form of the herbicidal composition is the granule, and in percentage by mass, the preparation raw materials of the granule at least comprise: 0.5-1.0% of the 3-(2-chloro-4-fluoro-5-(3-methyl-2,6-dioxo-4-trifluoromethyl-3, 6-dihydropyrimidin-1 (2H)-yl)phenyl)-5-methyl-4, 5-dihydroisoxazole-5-carboxylic acid ethyl ester, 4.5-20% of the glufosinate-P, 0.5-2% of the wetting agent, 1-4% of the dispersant, 0.5-2% of the emulsifier, 5-15% of the organic solvent, and the balance of the filler added to 100%.

9. The herbicidal composition containing 3-(2-chloro-4-fluoro-5-(3-methyl-2,6-dioxo-4-trifluoromethyl-3, 6-dihydropyrimidin-1 (2H)-yl)phenyl)-5-methyl-4, 5-dihydroisoxazole-5-carboxylic acid ethyl ester and glufosinate-P according to any one of claims 1-8, wherein a mass ratio of the 3-(2-chloro-4-fluoro-5-(3-methyl-2,6-dioxo-4-trifluoromethyl-3,6-dihydropyrimidin-1(2H)-yl)phenyl)-5-methyl-4,5-dihydroisoxazole-5-carboxylic acid ethyl ester to the glufosinate-P is 1:(9-20).

10. A use of the herbicidal composition containing 3-(2-chloro-4-fluoro-5-(3-methyl-2,6-dioxo-4-trifluoromethyl-3, 6-dihydropyrimidin-1 (2H)-yl)phenyl)-5-methyl-4, 5-dihydroisoxazole-5-carboxylic acid ethyl ester and glufosinate-P according to claim 9, wherein the herbicidal composition is used in prevention and control of weeds in non-cultivated land.

**INTERNATIONAL SEARCH REPORT**

| International application No. |
|---|
| **PCT/CN2023/122836** |

**A. CLASSIFICATION OF SUBJECT MATTER**

A01N 43/80(2006.01)i; A01N 57/20(2006.01)i; A01P 13/00(2006.01)i

According to International Patent Classification (IPC) or to both national classification and IPC

**B. FIELDS SEARCHED**

Minimum documentation searched (classification system followed by classification symbols)

IPC: A01N43; A01N57; A01P

Documentation searched other than minimum documentation to the extent that such documents are included in the fields searched

Electronic data base consulted during the international search (name of data base and, where practicable, search terms used)

CNTXT, ENTXTC, DWPI, CNKI, 万方, WANFANG, Web of Science, STN, 百度学术, BAIDU SCHOLAR: 南通江山农药化工股份有限公司, 苯嘧草唑, 草铵膦, 增效, glufosinate, (pyrimidine s phenyl s dihydroisoxazol), Synergistic, 化合物结构, 35597-44-5, 77182-82-2

**C. DOCUMENTS CONSIDERED TO BE RELEVANT**

| Category* | Citation of document, with indication, where appropriate, of the relevant passages | Relevant to claim No. |
|---|---|---|
| X | CN 114557358 A (NANTONG JIANGSHAN AGROCHEMICAL & CHEMICALS CO., LTD.; SHENYANG SINOCHEM AGROCHEMICALS R&D CO., LTD.) 31 May 2022 (2022-05-31) <br> description, paragraphs 7-11 and 13 | 1-10 |
| X | CN 112690283 A (SHENYANG SINOCHEM AGROCHEMICALS R&D CO., LTD.) 23 April 2021 (2021-04-23) <br> description, paragraphs 10 and 286, and table A, table B, and table 1 | 1-10 |
| PX | CN 115669671 A (NANTONG JIANGSHAN AGROCHEMICAL & CHEMICALS CO., LTD.) 03 February 2023 (2023-02-03) <br> claims 1-10 | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 December 2023** | **21 December 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/122836**

| Patent document cited in search report | | | Publication date (day/month/year) | Patent family member(s) | Publication date (day/month/year) |
|---|---|---|---|---|---|
| CN | 114557358 | A | 31 May 2022 | None | |
| CN | 112690283 | A | 23 April 2021 | None | |
| CN | 115669671 | A | 03 February 2023 | None | |

Form PCT/ISA/210 (patent family annex) (July 2022)

**REFERENCES CITED IN THE DESCRIPTION**

**Patent documents cited in the description**

- CN 105660688 A
- CN 112741102 A